# EUROPEAN PATENT APPLICATION

(11) **EP 0 939 266 A2**
(43) Date of publication of application: **01.09.1999**
(21) Application number: 99102748.3
(22) Date of filing: 22.02.1999
(51) Int. Cl.: F16L 33/26

(54) **Method for joining braided flexible metal hoses to endpieces**

(30) Priority: 26.02.1998 IT TO980149
(71) Applicant: Castelli, Sergio, I-10146 Torino (IT)
(72) Inventor: Castelli, Sergio, I-10146 Torino (IT)
(74) Representative: Modiano, Guido, Dr.-Ing.

(57) **Abstract**

A method for hermetically joining braided flexible metal hoses (10) to endpieces (13), comprising the steps of: positioning a metal braiding (11) and a braiding retention ring (12) on the hose (10) beforehand; mutually locking in position the hose (10), the braiding (11) and the ring (12); removing excess portions of hose and/or braiding, so that a cropping section (Sₜ) of the hose (10) coincides with a centerline plane of an end half-undulation of the hose, and so that a cropping plane (P) is aligned with the rim of the braiding retention ring (12); placing the endpiece (13) adjacent to the cropping section (St), applying contact pressure; and in performing a single peripheral weld which joins the hose (10), the braiding (11) and the braiding retention ring (12) to the endpiece (13).

## Description

The present invention relates to a method for hermetically joining braided corrugated flexible metal hoses to generic endpieces, such as tangs, threaded connectors and the like, and to the flexible hose-endpiece assembly provided by carrying out said method.

It is known that the joining of a flexible metal hose to an endpiece is performed by welding and with the aid of a braiding retention ring, typically by means of two or more welds performed in succession.

One known method consists in performing a first weld to join the corrugated hose to the endpiece and a successive second weld to join to said endpiece the metallic protective braiding and the corresponding braiding retention ring, both of which are fitted on said hose.

A further known method consists in performing a first weld in order to join end to end the flexible hose to the protective braiding and the braiding retention ring fitted on said hose, and a second successive weld in order to join the first weld to the endpiece.

The first method is technically satisfactory but requires relatively complicated and expensive equipment and is suitable only for large runs which justify the cost of such equipment.

The second known method, which is economically more advantageous, is however technically unreliable, since it entails rewelding, i.e., performing the second weld over the first one, with the possibility of forming cracks, seams and/or removing material in said first weld, with the consequent formation of burr, especially on the inner side of the hose, at the hose/endpiece joining section.

The aim of the present invention is to eliminate these drawbacks and to provide a method which, by means of a single weld, ensures the correct hermetic joining of the flexible hose and of the braided sheath to the endpiece.

Another object of the invention is to provide a flexible hose-endpiece assembly which is particularly rigid and tough, is completely free from welding burr and in which perfect mating of the mutually adjacent and cooperating surfaces of the hose and of the endpiece is ensured.

This aim, this object and others which will become apparent hereinafter from the following detailed description are achieved with a method for hermetically joining flexible metal hoses to endpieces and with a flexible hose-endpiece assembly which have the specific characteristics stated in claims 1 and 4 respectively.

The invention is substantially based on the concept of positioning the braiding and the braiding retention ring on the flexible hose beforehand; of mutually locking in position said hose, said braiding and said ring; of removing, by means of a rotating tool, the excess portions of hose and/or braiding, so that the cropping section of the hose coincides with the centerline plane of the end half-undulation of said hose, and so that said cropping plane is aligned with the rim of the braiding retention ring; of placing the endpiece adjacent to said cropping section, applying adequate contact pressure; and of performing a single peripheral weld which joins said hose, said braiding and said braiding retention ring to said endpiece.

Further characteristics and advantages of the method and of the flexible hose/endpiece assembly according to the invention will become apparent from the following detailed description and with reference to the accompanying drawings, given by way of nonlimitative example and wherein:
Figure 1 is a partial exploded sectional view of the assembly constituted by the flexible hose, the braiding, the braiding retention ring and the endpiece before mutual joining by welding;
Figure 2 is a sectional view, similar to Figure 1, of the assembly after the joining weld.

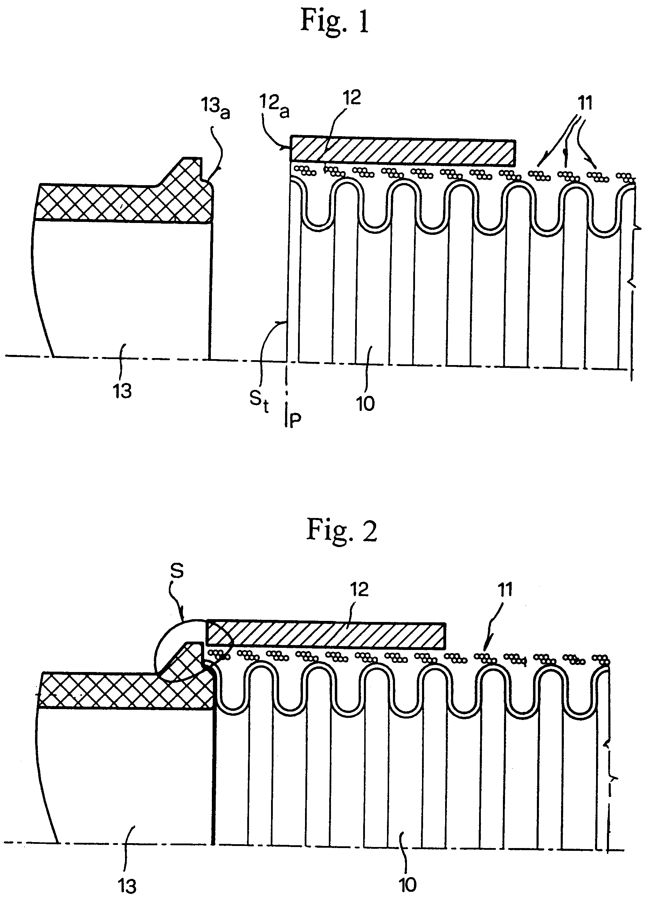

In Figure 1, the reference numeral 10 designates a flexible metal hose with parallel undulations, 11 designates a protective metallic braiding fitted on the hose 10, 12 designates a braiding retention ring, and 13 designates an endpiece to be joined hermetically to the hose 10.

The method according to the invention consists in positioning beforehand the braiding 11 and the braiding retention ring 12 on the hose 10, aligning their respective ends along an end section such as Sₜ. For this purpose, the braiding retention ring 12 and the braiding 11 are locked on the hose 10 by means of a fluid-driven vise (not shown), and a rotary cutting tool is used to remove the portions of the hose 10 and/or of the braiding 11 that protrude beyond the end section Sₜ, so that the cropping plane P of the hose 10 coincides with the centerline plane of the end half-undulation of the hose and is aligned with the rim 12a of the braiding retention ring 12.

Correspondingly, a front surface 13a for accommodating the end half-undulation is formed on the endpiece 13. The front surface is provided with a profile which is complementary to the profile of the end half-undulation.

After forming the end section Sₜ as described above, the endpiece 13 is placed adjacent to the end section so that its front surface 13a is received correctly in the end half-undulation of the hose 10. While maintaining a correct contact pressure, for example between 0.2 and 0.5 kg/cm², a single perimetric weld S is then performed which simultaneously joins the hose 10, the braiding 11 and the braiding retention ring 12 to the endpiece 13. The weld is preferably of the autogenous type and is performed for example with one of the following known processes: TIG welding, plasma welding, laser welding.

Without altering the concept of the invention, the details of execution and the embodiments of the joining method may be altered extensively, with respect to what has been described and illustrated by way of nonlimitative example, without thereby abandoning the scope of the invention.

The disclosures in Italian Patent Application No. TO98A000149 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for hermetically joining braided flexible metal hoses (10) to endpieces (13), characterized in that it comprises the steps of : positioning a braiding (11) and a braiding retention ring (12) on the flexible hose (10) beforehand; mutually locking in position said hose (10), said braiding (11) and said ring (12); removing excess portions of hose and/or braiding, so that a cropping section (Sₜ) of the hose (10) coincides with a centerline plane of an end half-undulation of said hose, and so that a cropping plane (P) is aligned with the rim of said braiding retention ring (12); placing the endpiece (13) adjacent to said cropping section (Sₜ), applying contact pressure; and performing a single peripheral weld (S) which joins said hose (10), said braiding (11) and said braiding retention ring (12) to said endpiece (13).

2. The method according to claim 1, characterized in that it comprises the step of preliminary forming, on the endpiece (13), a front surface (13a) for accommodating the end half-undulation of the hose (10).

3. The method according to claim 1, characterized in that said peripheral weld is of the autogenous type and is chosen among one of the following welding processes: TIG welding, plasma welding, laser welding.

4. The method according to claim 1, characterized in that said step of removing excess portions of hose and/or braiding is performed by means of a rotating tool.

5. A braided flexible hose (10)/endpiece (13) assembly produced by the joining method according to the preceding claims, characterized in that it comprises, in combination, an endpiece (13) with a surface (13a) for accommodating an end half-undulation of the hose (10), a braiding retention ring (12) fitted over the braiding (11) for protecting the hose (10) and the rim (11a) of which is aligned with a cropping plane (P) of said end half-undulation of the hose (10), and a single perimetric peripheral weld (S) which is located at said cropping plane and joins said hose (10), said braiding (11) and said braiding retention ring (12) to said endpiece (13).
